# EUROPÄISCHE PATENTSCHRIFT

(11) **EP 1 240 053 B1**
(45) Veröffentlichungstag und Bekanntmachung des Hinweises auf die Patenterteilung: **24.03.2004**
(21) Anmeldenummer: 00981332.0
(22) Anmeldetag: 01.12.2000
(51) Int. Cl.: B60R 1/12

(54) **AUSSENRÜCKSPIEGEL FÜR EIN FAHRZEUG MIT EINER LEUCHTENEINRICHTUNG**
EXTERNAL REAR-VIEW MIRROR FOR A MOTOR VEHICLE WITH A LAMP ARRANGEMENT
RETROVISEUR EXTERIEUR POUR VEHICULE POURVU D'UN DISPOSITIF D'ECLAIRAGE

(30) Priorität: 10.12.1999 DE 19959609
(43) Veröffentlichungstag der Anmeldung: 18.09.2002
(73) Patentinhaber: Volkswagen Aktiengesellschaft, 38436 Wolfsburg (DE)
(72) Erfinder: MARONDEL, Manfred, 38375 Räbke (DE); MÜLLER, Torsten, 25337 Elmshorn (DE)
(86) Internationale Anmeldenummer: PCT/EP2000/012128
(87) Internationale Veröffentlichungsnummer: WO 2001/042048

(56) Entgegenhaltungen:
- DE-A- 19 808 139
- DE-U- 29 804 489
- DE-U- 29 819 279
- GB-A- 2 129 749
- PATENT ABSTRACTS OF JAPAN vol. 1997, no. 11, 28. November 1997 (1997-11-28) & JP 09 175273 A (NISSAN MOTOR CO LTD), 8. Juli 1997 (1997-07-08)

## Beschreibung

Die Erfindung betrifft einen Außenrückspiegel für ein Fahrzeug gemäß den Oberbegriff des Anspruchs 1.

Aus der gattungsbildenden DE 298 19 279 ist ein Außenrückspiegel für Fahrzeuge bekannt, der einen Spiegelfuß und einen Spiegelkopf umfasst, der einen Spiegelglasträger aufweist und in dem mindestens eine Blinkleuchte untergebracht ist, die hinter einem Lichtfenster liegt. Bei dem Außenrückspiegel ist die Blinkleuchte so im Spiegelkopf angeordnet, daß sie Licht in Fahrtrichtung des Fahrzuges nach hinten unter einem Winkel von wenigstens 55° abstrahlt, bezogen auf eine parallel zur Fahrzeugachse liegende, im wesentlichen außerhalb des Umrisses des Spiegelkopfes verlaufende Gerade.

Femer ist in der europäischen Patentanmeldung EP 858 932 A2 ein Außenrückspiegel für Fahrzeuge beschrieben, bei dem in einem Spiegelgehäuse eine Glasträgerplatte verstellbar untergebracht ist. Das Spiegelgehäuse weist außerdem eine Lichtquelle auf, der eine Lichtaustrittsöffnung im Spiegelgehäuse zugeordnet ist. Die langgestreckte Lichtaustrittsöffnung ist mit einem Lichtleiter ausgefüllt, der innerhalb des Spiegelgehäuses mit der Lichtquelle verbunden ist. Über den Lichtleiter soll das von der Lichtquelle ausgesandte Licht einfach zur Lichtaustrittsöffnung geleitet werden.

Es ist die Aufgabe der Erfindung einen Außenrückspiegel mit einer Leuchteneinrichtung, insbesondere einer Blinkleuchteneinrichtung, zu schaffen, wobei die zulassungsrelevanten Abstrahlwinkel Berücksichtigung finden.

Die Aufgabe wird mit den Merkmalen des Patentanspruchs 1 gelöst. Bevorzugte Ausführungsformen der Erfindung sind Gegenstand der Unteransprüche.

Gemäß der Erfindung ist vorgesehen, daß die mindestens eine Lichtquelle aus mehreren verteilt angeordneten Leuchtdioden besteht, wobei die Leuchtdioden ihr Licht über Reflektoren in Richtung der Abdeckscheibe ausstrahlen. Nach einer bevorzugten Ausführung umfaßt die Leuchteneinrichtung wenigstens eine erste Leuchtdiode, die in der Leuchteneinrichtung derart angeordnet ist, daß das von ihr abgestrahlte Licht seitlich und/oder seitlich nach hinten in bezug auf das Fahrzeug ausgesendet wird, sowie mehrere zweite Leuchtdioden, die in der Leuchteneinrichtung derart angeordnet sind, daß das von ihnen abgestrahlte Licht in bezug auf die Vorwärts-Fahrtrichtung des Fahrzeuges im wesentlichen nach vorn abgestrahlt wird.

Dabei sind die Leuchtdioden vorzugsweise bandartig in der Leuchteneinrichtung angeordnet und bilden somit eine langgestreckte Leuchteneinrichtung, die sich vorzugsweise über den größten Teil der Breite des Spiegelgehäuses erstreckt.

In einer Ausführungsform sind die Leuchtdioden in mehreren nebeneinander angeordneten Reihen angeordnet.

Eine weitere Ausbildung der Erfindung sieht vor, daß die Leuchteneinrichtung im wesentlichen im unteren Bereich des Spiegelgehäuses bezogen auf das Fahrzeug angeordnet ist, wobei auch eine mittige Anordnung im Spiegelgehäuse denkbar ist.

Die wenigstens eine erste Leuchtdiode ist nach einer Ausführung der Erfindung derart in der Leuchteneinrichtung angeordnet, daß die Leuchtendiode bezogen auf die Vorwärts-Fahrtrichtung des Fahrzeuges seitlich nach hinten unter einem Winkel von wenigstens 55°, bezogen auf eine parallel zur Fahrzeugachse liegende, im wesentlichen außerhalb des Umrisses des Spiegelgehäuses verlaufende Gerade, abstrahlt. Vorzugsweise strahlt die wenigstens eine Leuchtdiode in einem Winkelbereich von mindestens 60° ihr Licht ab.

Zusätzlich kann mindestens eine weitere dritte Leuchtdiode vorgesehen sein, die bezogen auf die Vorwärts-Fahrtrichtung auf der Rückseite des Spiegelgehäuses angeordnet ist und ihr Licht direkt nach hinten abstrahlt. Nach einer Ausgestaltung dieser erfindungsgemäßen Variante sind mehrere dritte Leuchtdioden vorgesehen, die am Rand des Spiegelgehäuses um den Spiegel angeordnet sind, wobei auch denkbar ist, den Spiegel semitransparent auszubilden und wenigstens ein Teil der dritten Leuchtdioden hinter dem Spiegel anzuordnen.

Nachfolgend wird die Erfindung anhand eines Ausführungsbeispiels näher beschrieben. Die zugehörigen Zeichnungen zeigen:
- Fig. 1:: eine Draufsicht und teilweisen Schnitt des erfindungsgemäßen Außenspiegels und
- Fig. 2:: eine Rückansicht des erfindungsgemäßen Außenspiegels.

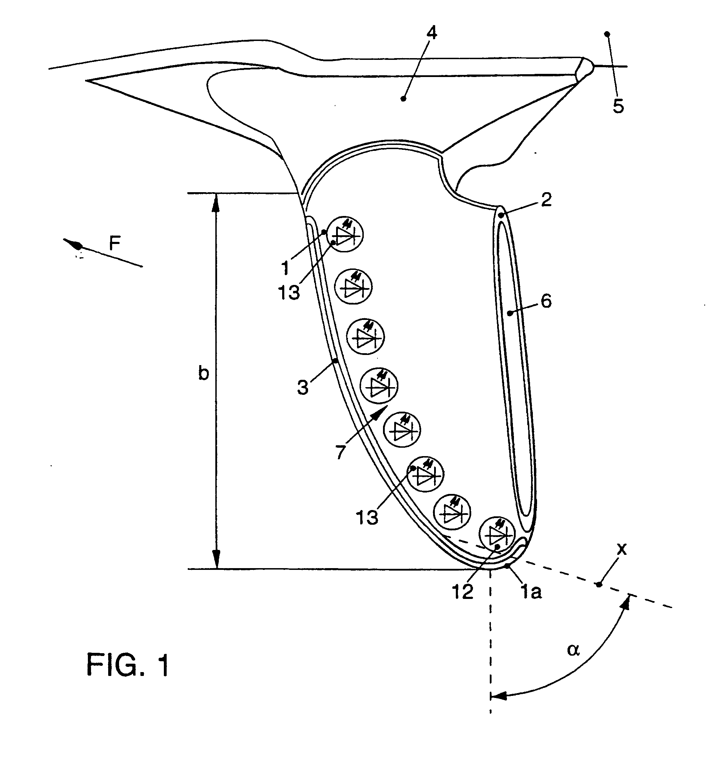

Der in Fig. 1 dargestellte erfindungsgemäße Außenspiegel besteht im wesentlichen aus einem an einem Fahrzeug 5 befestigbaren oder befestigten Spiegelfuß 4, der wiederum über ein nicht gezeigtes Gelenk mit dem Spiegelgehäuse 1 verbunden ist. Das Spiegelgehäuse 1 weist auf seiner Rückseite 2 einen wiederum im Spiegelgehäuse 1 gelenkig angeordneten Spiegel 6 auf. Zusätzlich ist im Spiegelgehäuse 1 eine Leuchteinrichtung 7 mit einer langgestreckten, bandartigen, lichtdurchlässigen Abdeckscheibe 3 vorgesehen, wobei sich die Leuchteneinrichtung 7, zumindest teilweise über das freie Ende des Spiegelgehäuses 1 zur Rückseite 2 hin erstreckt und einen wesentlichen Teil der Breite b des Spiegelgehäuses 1 einnimmt. In der Leuchteneinrichtung 7 sind über die Vorderseite des Spiegelgehäuses 1 verteilt eine Mehrzahl von zweiten Leuchtdioden 13 angeordnet, die ihr Licht über Reflektoren in Richtung der Abdeckscheibe 3 bezogen auf die Vorwärts-Fahrtrichtung F des Fahrzeugs nach vorn abstrahlen. Des weiteren weist die Leuchteneinrichtung 7 mindestens eine weitere erste Leuchtdiode 12 am freien Ende des Spiegelgehäuses 1 auf, wobei diese erste Leuchtdiode 12 bezogen auf die Fahrtrichtung F des Fahrzeuges 5 seitlich nach hinten unter einem Winkel α von wenigstens 55° ihr Licht abstrahlt, bezogen auf eine parallel zur Fahrzeugachse liegende Gerade x.

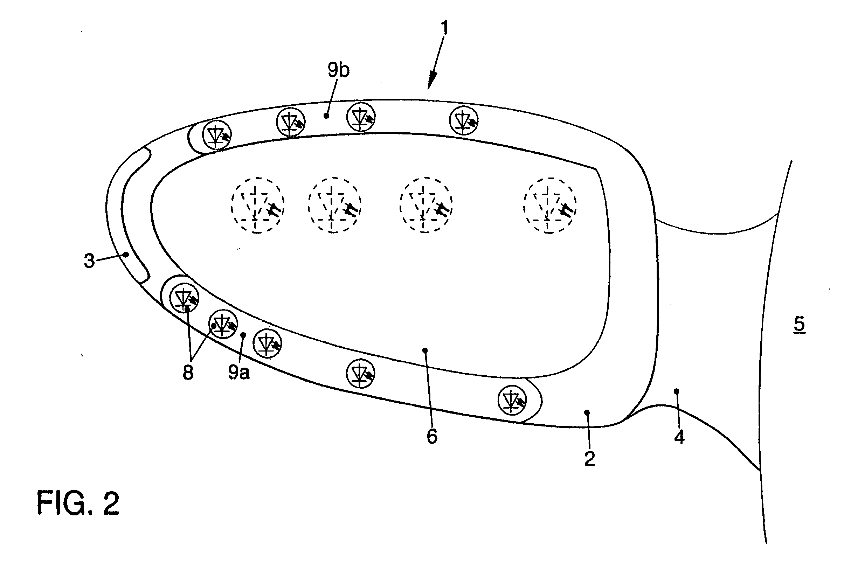

Fig. 2 zeigt eine Rückansicht des erfindungsgemäßen Außenrückspiegels. Bei diesem Ausführungsbeispiel ist auf der Rückseite 2 des Spiegelgehäuses wenigstens eine weitere Leuchteneinrichtung mit dritten Leuchtdioden 8 vorgesehen, wobei die Leuchteneinrichtung mit einer einheitlichen Abdeckscheibe oder mit Teilabdeckscheiben 9a, 9b zumindest teilweise um den Rand des Spiegels 6 angeordnet sind. Eine andere Möglichkeit besteht darin, daß der Spiegel 6 teil- oder semitransparent ausgebildet ist und zumindest ein Teil der Leuchtdioden hinter dem Spiegel 6 angeordnet sind. Wie aus Fig. 2 ersichtlich, hat im Ausführungsbeispiel die Anzahl der Leuchtdioden 8 pro Flächeneinheit am freien Ende 1 a des Spiegelgehäuses (1) ihr Maximum.

Besonders vorteilhaft eignet sich die Leuchteneinrichtung 7 mit ihrem Leuchtdioden 12 und 13 als Blinkleuchte.

### BEZUGSLEICHENLISTE

- 1: Spiegelgehäuse
- 1a: freies Ende des Spiegelgehäuses
- 2: Rückseite des Spiegelgehäuses
- 3: Abdeckscheibe
- 4: Spiegelfuß
- 5: Fahrzeug
- 6: Spiegel
- 7: Leuchteneinrichtung
- 8: Leuchtdioden
- 9a, 9b: Abdeckscheibe
- 12: Leuchtdioden
- 13: Leuchtdioden
- x: Achse
- α: Winkel
- F: Vorwärts-Fahrtrichtung
- b: Breite

## Patentansprüche

1. Außenrückspiegel für ein Fahrzeug mit einem Spiegelgehäuse (1) und einem Spiegelfuß (4), wobei das Spiegelgehäuse (1) einen Spiegel (6) auf seiner Rückseite (2) und mindestens eine Leuchteneinrichtung (7) zur Realisierung einer Blinkfunktion auf seiner Vorderseite bezogen auf die Vorwärts-Fahrtrichtung (F) des Fahrzeuges mit mehreren verteilt angeordneten Leuchtdioden (13) als Lichtquelle, der wenigstens eine Lichtaustrittsöffnung mit einer Abdeckscheibe (3) im Spiegelgehäuse (1) zugeordnet ist, umfasst, **dadurch gekennzeichnet, dass** die verteilt angeordneten Leuchtdioden (13) ihr Licht über Reflektoren in Richtung der Abdeckscheibe (3) abstrahlen.

2. Außenrückspiegel nach Anspruch 1, **dadurch gekennzeichnet, dass** die Leuchteneinrichtung (7) im wesentlichen im unteren Bereich der Vorderseite des Spiegelgehäuses (1) bezogen auf das Fahrzeug (5) angeordnet ist.

3. Außenrückspiegel nach Anspruch 1 oder 2, **dadurch gekennzeichnet, dass** mindestens eine weitere Leuchtdiode (8) vorgesehen ist, die bezogen auf die Vorwärtsrichtung (F) des Fahrzeuges (5) auf der Rückseite (2) des Spiegelgehäuses (1) angeordnet ist und in Bezug auf die Fahrtrichtung (F) Licht direkt nach hinten abstrahlt.

4. Außenrückspiegel nach einem der vorangegangenen Ansprüche, **dadurch gekennzeichnet, dass** die Leuchteneinrichtung (7) wenigstens eine erste Leuchtdiode (12), die in der Leuchteneinrichtung (7) derart angeordnet ist, dass das von ihr abgestrahlte Licht seitlich in Bezug auf die Längserstreckung des Fahrzeuges (5) ausgesendet wird, und mehrere zweite Leuchtdioden (13) umfasst, die in der Leuchteneinrichtung (7) derart angeordnet sind, dass das von ihnen abgestrahlte Licht in bezug auf die Vorwärts-Fahrtrichtung (F) des Fahrzeuges (5) im wesentlichen nach vor ausgesendet wird.

5. Außenrückspiegel nach einem der vorangegangenen Ansprüche, **dadurch gekennzeichnet, dass** die Leuchtdioden (12, 13) bandartig angeordnet sind.

6. Außenrückspiegel nach Anspruch 5, **dadurch gekennzeichnet, dass** die Leuchtdioden (12, 13) im wesentlichen mehrere vertikale Reihen bilden.

7. Außenrückspiegel nach einem der vorangegangenen Ansprüche, **dadurch gekennzeichnet, dass** die Leuchteneinrichtung (7) über den wesentlichen Teil der Breite (b) des Spiegelgehäuses (1) angeordnet ist.

8. Außenrückspiegel nach einem der Ansprüche 4 bis 7, **dadurch gekennzeichnet, dass** die wenigstens eine erste Leuchtdiode (12) derart angeordnet ist, dass die erste Leuchtdiode (12) bezogen auf die Vorwärts-Fahrtrichtung (F) des Fahrzeuges (5) seitlich nach hinten auf einen Winkel (α) von wenigstens 55° abstrahlt, bezogen auf eine parallel zur Fahrzeuglängsachse liegende, im wesentlichen außerhalb des Umrisses des Spiegelgehäuses (1) verlaufende Gerade (x).

9. Außenrückspiegel nach Anspruch 8, **dadurch gekennzeichnet, dass** die wenigstens eine erste Leuchtdiode (12) in einem Winkelbereich (α) von mindestens 60° Licht abstrahlt.

10. Außenrückspiegel nach einem der Ansprüche 3 bis 9, **dadurch gekennzeichnet, dass** mehrere Leuchtdioden (8) vorgesehen sind, die am Rand des Spiegelgehäuses (1) um den Spiegel angeordnet sind.

11. Außenrückspiegel nach einem der Ansprüche 3 bis 10, **dadurch gekennzeichnet, dass** der Spiegel (6) semitransparent ausgebildet ist und wenigstens ein Teil der Leuchtdioden (8) hinter dem Spiegel (6) angeordnet ist.

12. Außenrückspiegel nach einem der Ansprüche 3 bis 11, **dadurch gekennzeichnet, dass** die Anzahl der Leuchtdioden (8) pro Flächeneinheit an dem freien Ende (1a) des Spiegelgehäuses (1) ein Maximum hat.

## Claims

1. External rear-view mirror for a vehicle, having a mirror housing (1) and a mirror baseplate (4), the mirror housing (1) comprising a mirror (6) on its rear side (2) and at least one lamp device (7) for implementing a flashing function on its front side with reference to the forward driving direction (F) of the vehicle, and having, arranged in a distributed fashion, a plurality of light-emitting diodes (13) as a light source that is assigned at least one light exit opening with a cover pane (3) in the mirror housing (1), **characterized in that** the light-emitting diodes (13) arranged in a distributed fashion radiate their light via reflectors in the direction of the cover pane (3).

2. External rear-view mirror according to Claim 1, **characterized in that** the lamp device (7) is substantially arranged in the lower region of the front side of the mirror housing (1) with reference to the vehicle (5).

3. External rear-view mirror according to Claim 1 or 2, **characterized in that** there is provided at least one further light-emitting diode (8) which, with reference to the forward direction (F) of the vehicle (5), is arranged on the rear side (2) of the mirror housing (1), and radiates light directly rearwards with reference to the driving direction (F).

4. External rear-view mirror according to one of the preceding claims, **characterized in that** the lamp device (7) comprises at least one first light-emitting diode (12) which is arranged in the lamp device (7) in such a way that the light radiated by it is emitted laterally with reference to the longitudinal extent of the vehicle (5), and a plurality of second light-emitting diodes (13) which are arranged in the lamp device (7) in such a way that the light radiated by them is emitted substantially forwards with reference to the forward driving direction (F) of the vehicle (5).

5. External rear-view mirror according to one of the preceding claims, **characterized in that** the light-emitting diodes (12, 13) are arranged like a strip.

6. External rear-view mirror according to Claim 5, **characterized in that** the light-emitting diodes (12, 13) substantially form a plurality of vertical rows.

7. External rear-view mirror according to one of the preceding claims, **characterized in that** the lamp device (7) is arranged over a substantial part of the width (b) of the mirror housing (1).

8. External rear-view mirror according to one of Claims 4 to 7, **characterized in that** the at least one first light-emitting diode (12) is arranged in such a way that, with reference to the forward driving direction (F) of the vehicle (5), the first light-emitting diode (12) radiates laterally rearwards onto an angle (α) of at least 55°, with reference to a straight line (x) lying parallel to the vehicle longitudinal axis and running substantially outside the contour of the mirror housing (1).

9. External rear-view mirror according to Claim 8, **characterized in that** the at least one first light-emitting diode (12) radiates light in an angular range (α) of at least 60°.

10. External rear-view mirror according to one of Claims 3 to 9, **characterized in that** a plurality of light-emitting diodes (8) are provided which are arranged around the mirror at the rim of the mirror housing (1).

11. External rear-view mirror according to one of Claims 3 to 10, **characterized in that** the mirror (6) is of semitransparent design, and at least a portion of the light-emitting diodes (8) are arranged behind the mirror (6).

12. External rear-view mirror according to one of Claims 3 to 11, **characterized in that** the number of light-emitting diodes (8) per unit of area is a maximum at the free end (1a) of the mirror housing (1).

## Revendications

1. Rétroviseur extérieur pour un véhicule comprenant un boîtier de miroir (1) et une base de miroir (4), dans lequel le boîtier de miroir (1) comprend un miroir (6) sur sa face arrière (2) et au moins un dispositif d'éclairage (7) pour réaliser une fonction de clignotant sur sa face avant par rapport à la direction de conduite vers l'avant (F) du véhicule avec plusieurs diodes lumineuses (13) réparties servant de source de lumière, à laquelle est associée au moins une ouverture de sortie de lumière avec un disque de recouvrement (3) dans le boîtier de miroir (1), **caractérisé en ce que** les diodes lumineuses (13) réparties émettent leur lumière par le biais de réflecteurs dans la direction du disque de recouvrement (3).

2. Rétroviseur extérieur selon la revendication 1, **caractérisé en ce que** le dispositif d'éclairage (7) est disposé essentiellement dans la région inférieure de la face avant du boîtier de miroir (1) par rapport au véhicule (5).

3. Rétroviseur extérieur selon la revendication 1 ou 2, **caractérisé en ce qu'**au moins une autre diode lumineuse (8) est prévue, laquelle est disposée, par rapport à la direction vers l'avant (F) du véhicule (5), sur la face arrière (2) du boîtier de miroir (1) et émet la lumière directement vers l'arrière par rapport à la direction de conduite (F).

4. Rétroviseur extérieur selon l'une quelconque des revendications précédentes, **caractérisé en ce que** le dispositif d'éclairage (7) comprend au moins une première diode lumineuse (12), qui est disposée dans le dispositif d'éclairage (7) de telle sorte que la lumière qu'elle émet soit envoyée latéralement par rapport à l'étendue longitudinale du véhicule (5), et plusieurs deuxièmes diodes lumineuses (13), qui sont disposées dans le dispositif d'éclairage (7) de telle sorte que la lumière qu'elles émettent soit envoyée essentiellement vers l'avant par rapport à la direction de conduite vers l'avant (F) du véhicule (5).

5. Rétroviseur extérieur selon l'une quelconque des revendications précédentes, **caractérisé en ce que** les diodes lumineuses (12, 13) sont disposées en forme de bande.

6. Rétroviseur extérieur selon la revendication 5, **caractérisé en ce que** les diodes lumineuses (12, 13) forment essentiellement plusieurs rangées verticales.

7. Rétroviseur extérieur selon l'une quelconque des revendications précédentes, **caractérisé en ce que** le dispositif d'éclairage (7) est disposé sur la majeure partie de la largeur (b) du boîtier de miroir (1).

8. Rétroviseur extérieur selon l'une quelconque des revendications 4 à 7, **caractérisé en ce que** l'au moins une première diode lumineuse (12) est disposée de telle sorte que la première diode lumineuse (12), par rapport à la direction de conduite vers l'avant (F) du véhicule (5), émette latéralement vers l'arrière suivant un angle (α) d'au moins 55°, par rapport à une droite (x) parallèle à l'axe longitudinal du véhicule, s'étendant essentiellement en dehors du pourtour du boîtier de miroir (1).

9. Rétroviseur extérieur selon la revendication 8, **caractérisé en ce que** l'au moins une première diode lumineuse (12) émet de la lumière dans une plage angulaire (α) d'au moins 60°.

10. Rétroviseur extérieur selon l'une quelconque des revendications 3 à 9, **caractérisé en ce que** plusieurs diodes lumineuses (8) sont prévues, lesquelles sont disposées sur le bord du boîtier de miroir (1) autour du miroir.

11. Rétroviseur extérieur selon l'une quelconque des revendications 3 à 10, **caractérisé en ce que** le miroir (6) est semi-transparent et au moins une partie des diodes lumineuses (8) est disposée derrière le miroir (6).

12. Rétroviseur extérieur selon l'une quelconque des revendications 3 à 11, **caractérisé en ce que** le nombre des diodes lumineuses (8) par unité de surface est maximal sur l'extrémité libre (la) du boîtier de miroir (1).
